# EUROPÄISCHE PATENTSCHRIFT

(11) **EP 1 613 993 B1**
(45) Veröffentlichungstag und Bekanntmachung des Hinweises auf die Patenterteilung: **05.12.2007**
(21) Anmeldenummer: 04723539.5
(22) Anmeldetag: 26.03.2004
(51) Int. Cl.: G02B 6/44

(54) **GLASFASERKOPPLERMODUL**
OPTICAL FIBER COUPLER MODULE
MODULE COUPLEUR A FIBRES DE VERRE

(30) Priorität: 16.04.2003 DE 10317620
(43) Veröffentlichungstag der Anmeldung: 11.01.2006
(73) Patentinhaber: ADC GMBH, 14167 Berlin (DE)
(72) Erfinder: LAURISCH, Steffen, 15537 Berlin (DE); KLEIN, Klaus, 12354 Berlin (DE); SANDECK, Hans-Peter, 12161 Berlin (DE)
(86) Internationale Anmeldenummer: PCT/EP2004/003232
(87) Internationale Veröffentlichungsnummer: WO 2004/092797

(56) Entgegenhaltungen:
- EP-A- 0 617 304
- WO-A-00/05611
- DE-A- 10 113 528
- DE-C- 4 308 228
- DE-U- 29 901 931
- US-B1- 6 192 180
- US-B1- 6 418 262
- PATENT ABSTRACTS OF JAPAN Bd. 1998, Nr. 01, 30. Januar 1998 (1998-01-30) -& JP 09 236709 A (FUJIKURA LTD; NIPPON TELEGR APH & TELEPHONE CORP), 9. September 1997 (1997-09-09)
- PATENT ABSTRACTS OF JAPAN Bd. 2002, Nr. 12, 12. Dezember 2002 (2002-12-12) -& JP 2002 236219 A (KANSAI ELECTRIC POWER CO INC:THE; SUMIDEN ASAHI INDUSTRIES LTD), 23. August 2002 (2002-08-23)

## Beschreibung

Die Erfindung betrifft ein Glasfaser-Kopplermodul gemäß dem Oberbegriff des Patentanspruchs 1.

Zunehmend wächst die Aufgabenstellung, in Glasfaserverteilergestellen Glasfaserverteitereinschübe mit Monitoring einzusetzen. Die als Koppler-Module oder auch als Monitoring-Module bezeichneten Einheiten werden in 19"-Baugruppenträger eingesetzt und sind mit Standard-Steckermodulen kombinierbar.

Hierzu ist es bekannt, dass das Glasfaser-Kopplermodul einen Koppler umfasst, mittels dessen die Signale mindestens einer Glasfaser auf mindestens zwei abgehende Glasfasern aufgeteilt wird, wobei eine abgehende Glasfaser für das Monitoring verwendet wird. Weiter umfassen die bekannten Glasfaser-Kopplermodule eine erste und zweite Gruppe von Kupplungen, wobei die zweite Gruppe von Kupplungen an der Frontplatte angeordnet ist. Über die erste Gruppe von Kopplern werden von der Rückseite des Glasfaser-Kopplermoduls kommende Stecker aufgenommen und über an der gegenüberliegenden Seite der Kupplung gesteckte Stecker in den Koppler geführt. Vom Koppler gehen dann die Glasfasern mit einem Stecker an die Kupplungen der zweiten Gruppe. Häufig ist es ausreichend, dass nur die TX-Glasfasern überwacht werden. Daher werden die rückseitigen RX-Glasfaserstecker direkt in die Kupplung an der Frontplatte gesteckt. Die TX-Glasfaserstecker werden hingegen in die Kupplungen der ersten Gruppe eingesteckt und über den Koppler zur zweiten Gruppe der Kupplungen geführt. Aufgrund der Tatsache, dass somit nur die Hälfte der Glasfasern zum Koppler geführt werden muss, stellen die Mindestbiegeradien kein Problem dar. Nachteilig an dem bekannten Glasfaser-Kopplermodul ist dessen Wartungsunfreundlichkeit. Bei Glasfaser-Kopplermodulen ist es nach einiger Zeit notwendig, die Stecker zu reinigen. Aufgrund des nur geringen Platzes ist es äußerst schwierig, die innerhalb des Gehäuses in der ersten und zweiten Gruppe von Kupplungen gesteckten Stecker ohne Werkzeug zu entfernen. Darüber hinaus ist es kaum möglich, einen Stecker zu ziehen, ohne die benachbarten Glasfasern zu berühren und somit deren Übertragungseigenschaften zu beeinflussen.

Aus der US-6,418,262 B1 ist ein Glasfaser-Kopplermodul bekannt, umfassend einen Kassettenträger, der mit einer Frontplatte verbunden ist, einem Koppler, der an dem Kassettenträger angeordnet ist, einer ersten Gruppe von Kupplungen und einer zweiten Gruppe von Kupplungen, wobei die erste Gruppe von Kupplungen auf einer Trägerplatte und die zweite Gruppe von Kupplungen an der Frontplatte angeordnet sind. Dabei ist die Trägerplatte parallel zur Frontplatte ausgerichtet. Ein ähnliches Glasfaser-Kopplermodul ist aus der WO 00/05611 vorbekannt.

Aus der EP 0 617 304 A1 bzw. der JP 09 236709 ist ein Glasfaser-Kopplermodul bekannt, umfassend einen Kassettenträger, dessen Kassettenträgerplatte senkrecht zu einer Frontplatte ausgerichtet ist und auf dem ein Koppler angeordnet ist, sowie eine Gruppe von Kupplungen, die in die Frontplatte eingelassen sind. Die Kassettenanordnung umfasst eine Mehrzahl Module und modular zu einem Block miteinander stapelbar verbindbare Kassetten in Form von Spleisskassetten und/oder Kopplerkassetten und/oder Übertängenkassetten, wobei die Kassetten untereinander und/oder zusammen mit Deckelteilen über Scharniermittel aufklappbar und verriegelbar miteinander verbunden sind.

Der Erfindung liegt daher das technische Problem zugrunde, ein wartungsfreundliches Glasfaser-Kopplermodul zu schaffen.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfasst das Glasfaser-Kopplermodul einen Kassettenträger, der einen Kassettenträger, der eine ebene Kassettenträgerplatte aufweist, wobei der Kassettenträger mit einer Frontplatte verbunden ist, wobei die ebene Kassettenträgerplatte senkrecht zur Frontplatte steht, einen Koppler, der an dem Kassettenträger angeordnet ist, einer ersten Gruppe von Kupplungen und einer zweiten Gruppe von Kupplungen, wobei die zweite Gruppe von Kupplungen an der Frontplatte angeordnet ist, und die erste Gruppe von Kupplungen auf einer Trägerplatte angeordnet ist, wobei die Trägerplatte parallel zur Kassettenträgerplatte ausgerichtet ist, wobei die Trägerplatte schwenkbar an dem Kassettenträger angeordnet ist, wobei die Schwenkachse der Trägerplatte parallel zu einer Seitenkante der Kassettenträgerplatte verläuft, wobei die Kupplungen auf der Trägerplatte so ausgerichtet sind, dass ihre Steckrichtung parallel zur Schwenkachse der Trägerplatte verläuft. Dadurch kann für Wartungszwecke die Trägerplatte aufgeschwenkt werden, so dass die Kupplungen und somit die in die Kupplungen gesteckten Stecker sich in einer anderen Ebene befinden. Hierdurch sind sowohl die Stecker in der ersten als auch der zweiten Gruppe von Kupplungen frei zugänglich, so dass diese ohne Berührung der anderen Glasfasern gezogen, gereinigt und wieder gesteckt werden können. Trägerplatte ist dabei allgemein als geeigneter Trägerkörper zu verstehen.

In einer bevorzugten Ausführungsform ist jedem von der Rückseite ankommenden Patchkabel eine Kupplung der ersten Gruppe zugeordnet, wobei die Kupplungen vorzugsweise alle in einer Reihe angeordnet sind. Somit sind die von der Rückseite des Glasfaser-Kopplermoduls ankommenden Patchkabel von der Rückseite aus einfach und leicht zugänglich, im Gegensatz zu den durchgeschleiften Patchkabeln beim Stand der Technik, die teilweise direkt in die Kupplungen der zweiten Gruppe von Kupplungen gesteckt sind.

In einer weiteren bevorzugten Ausführungsform sind alle Kupplungen der zweiten Gruppe in einer Reihe angeordnet.

In einer weiteren bevorzugten Ausführungsform sind unter der Trägerplatte Elemente zur Aufnahme einer Reserve-Arbeitslänge von Glasfasern angeordnet. Durch die Reserve-Arbeitslängen können die Stecker gezogen und eine gewisse Entfernung bewegt werden, was den Wartungsvorgang erheblich vereinfacht.

In einer weiteren bevorzugten Ausführungsform ist unter der Trägerplatte mindestens ein Umlenkelement angeordnet. Hierdurch ist sichergestellt, dass die Glasfasern unter Einhaltung der Mindest-Biegeradien in den darunter liegenden Koppler geführt werden können.

In einer weiteren bevorzugten Ausführungsform ist das Umlenkelement als Innenbegrenzer ausgebildet. Hierdurch ist sichergestellt, dass beim Ziehen der Stecker die aus dem die Reserve-Arbeitslänge beinhaltenden Speicher gezogene Glasfaser im Speicher selbst den Mindest-Biegeradius nicht unterschreitet.

In einer weiteren bevorzugten Ausführungsform ist der Innenbegrenzer mit mindestens einem Niederhalter ausgebildet. Durch den Niederhalter wird insbesondere verhindert, dass beim Ziehen an der Glasfaser diese sich nach oben wölbt und somit oberhalb des Innenbegrenzers unter den Mindest-Biegeradius zusammengezogen werden könnte.

In einer weiteren bevorzugten Ausführungsform sind seitlich an der Trägerplatte Kabelkanäle angeordnet. Durch diese Kabelkanäle können die Glasfasern unter Einhaltung der Mindest-Biegeradien von der ersten Gruppe von Kupplungen zurückgeführt und in den unterhalb der Trägerplatte angeordneten Speicherbereich geführt werden. Ebenso können die Glasfasern über die Kabelkanäle wieder vom Speicherbereich bzw. Koppler zurückgeführt werden und mit Steckern in die Kupplungen der zweiten Gruppe von Kupplungen gesteckt werden.

In einer weiteren bevorzugten Ausführungsform ist die Breite der Trägerplatte mit Kabelkanälen kleiner oder gleich der Breite des Kassettenträgers. Dadurch kann das erfindungsgemäße Glasfaser-Kopplermodul in Standard 19"-Einschübe verwendet werden. Durch die zusätzlichen Kabelkanäle wird also die Gesamtbreite des Glasfaser-Kopplermoduls nicht größer, sondern die ohnehin vorhandene Breite des Kassettenträgers wird für die Glasfaserführung ausgenutzt.

In einer weiteren bevorzugten Ausführungsform ist zwischen den Kabelkanälen ein Anschlussteil in Form einer Platte angeordnet. Das Anschlussteil schützt zum einen die Glasfasern und hält diese nieder. Zum anderen kann das Anschlussteil beispielsweise als Beschriftungsfläche dienen.

In einer weiteren bevorzugten Ausführungsform ist die Trägerplatte zur Rückseite des Kassettenträgers mit nach unten gebogenen V-förmigen Verlängerungen ausgebildet. Die V-förmigen Verlängerungen trennen die rückgeführten Glasfasern von den darüber angeordneten Steckern in der ersten Gruppe von Kupplungen.

Die Erfindung wird nachfolgend anhand eines bevorzugten Ausführungsbeispieles näher erläutert. Die Fig. zeigen:
- Fig. 1: eine perspektivische Darstellung eines Glasfaser-Kopplermoduls im geschlossenen Zustand,
- Fig. 2: eine perspektivische Darstellung des Glasfaser-Kopplermoduls in einer aufgeschwenkten Position,
- Fig. 3: Prinzipschaltbild der Glasfaser-Verbindungen des Glasfaser-Kopplermoduls und
- Fig. 4: eine perspektivische Darstellung eines herausgezogenen und aufgeschwenkten Glasfaserkopplermoduls in einem Baugruppen-Träger.

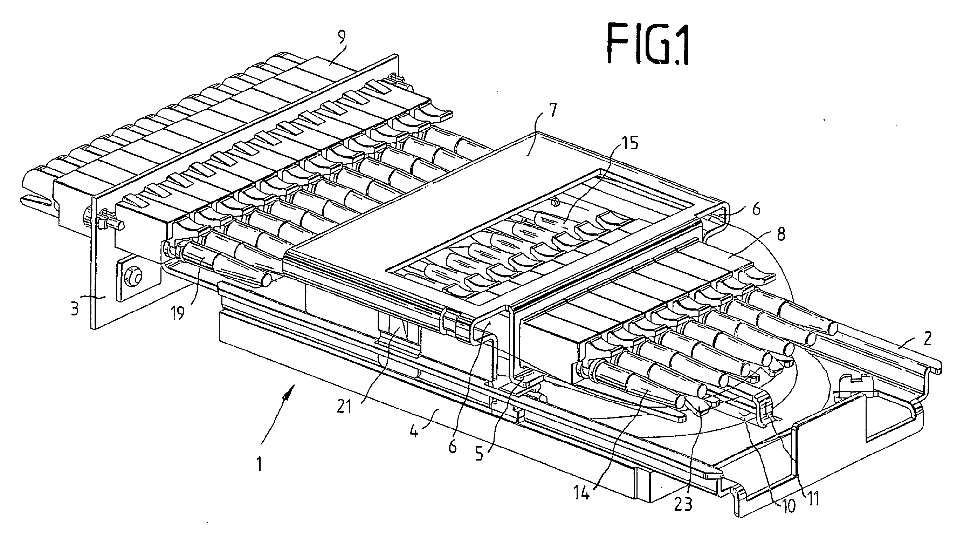

In der Fig. 1 ist das Glasfaser-Kopplermodul 1 dargestellt. Das Glasfaser-Kopplermodul 1 umfasst einen Kassettenträger 2, der mit einer Frontplatte 3 verbunden ist. Unterhalb des Kassettenträgers 2 ist ein Koppler 4 angeordnet. An dem Kassettenträger 2 ist schwenkbar eine Trägerplatte 5 angelenkt. An der Trägerplatte 5 sind seitlich zwei Kabelkanäle 6 angeordnet, zwischen denen ein Anschlussteil 7 angeordnet ist. Auf der Trägerplatte 5 ist eine erste Gruppe von acht Kupplungen 8 angeordnet.

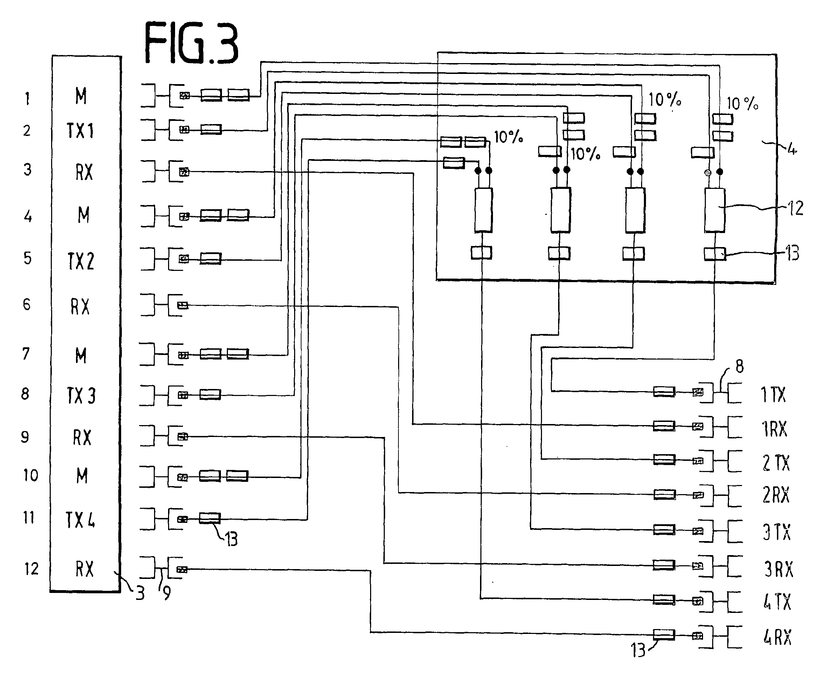

An der Frontplatte 3 ist eine zweite Gruppe von zwölf Kupplungen 9 angeordnet. Der Kassettenträger 2 weist einen Freischnitt 10 auf, aus dem ein Niederhalter 11 herausgebogen ist. Bevor nun das Glasfaser-Kopplermodul 1 in seiner konkreten Ausgestaltung näher erläutert wird, soll zunächst anhand Fig. 3 die damit zu realisierende Verschaltung der Glasfasern näher erläutert werden.

Von der Rückseite des Glasfaser-Kopplermoduls kommen acht Glasfasern mit Steckern an. Dabei sind jedem Teilnehmer zwei Glasfasern zugeordnet, eine für die ankommenden (RX) und eine für die abgehenden (TX) Signale. Diese nicht dargestellten Glasfaser-Stecker werden von der Rückseite des Glasfaser-Kopplermoduls in die Kupplungen 8 gesteckt. Zur Realisierung eines Monitoring, d.h. der Überwachung der Glasfaserverbindung, werden die TX-Glasfasern von der gegenüberliegenden Seite der Kupplungen 8 über Glasfasern mit Stecker zu dem Koppler 4 geführt. In dem Koppler 4 werden die TX-Signale mittels Splitter 12 aufgeteilt, wobei beispielsweise 10 % der Lichtleistung in eine Glasfaser für das Monitoring eingekoppelt werden. Somit werden vier ankommende Glasfasern im Koppler 4 auf acht abgehende Glasfasern aufgeteilt. Wird wie dargestellt auf ein Monitoring der RX-Glasfasern verzichtet, können diese über entsprechende Patchkabel von den Kupplungen 8 direkt zu den Kupplungen 9 geführt werden. Die Monitoring-Signale M können dann mittels von der Vorderseite der Frontplatte 3 eingesteckter Stecker abgegriffen und zu einer Überwachungseinheit geführt werden. Zur besseren Orientierung für den Monteur können die einzelnen Glasfasern mittels Farbmarkierungen 13 gekennzeichnet werden. Es versteht sich, dass auch andere Aufteilungen im Koppler 4 möglich sind, beispielsweise eine Aufteilung auf drei Glasfasern. Des weiteren können auch die RX-Glasfasern in das Monitoring einbezogen werden. Ebenso ist die Anzahl der RX- und TX-Glasfasern beliebig. Des weiteren kann auch eine bidirektionale Glasfaserverbindung zur Anwendung kommen.

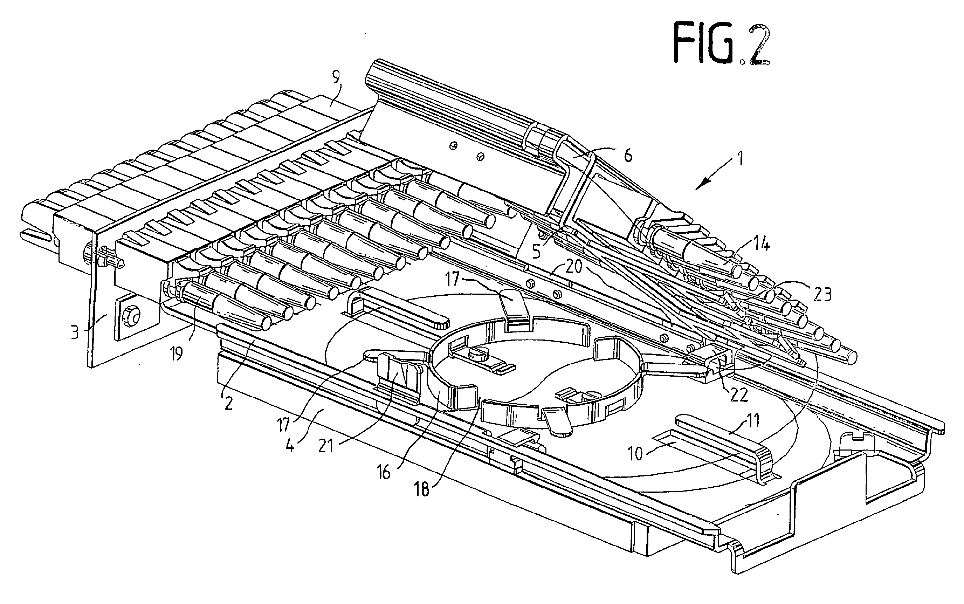

In der Fig. 1 sind die von der Rückseite des Glasfaser-Kopplermoduls 1 gesteckten Stecker 14 sowie die abgehenden Stecker 15 an der ersten Gruppe von Kupplungen 8 dargestellt. Die an den abgehenden Steckern 15 angeordneten Glasfasern werden über die Kabelkanäle 6 zurückgeführt. Dabei werden die vier linken Glasfasern der Stecker 15 im rechten Kabelkanal 6 und die rechten Glasfasern im linken Kabelkanal geführt, wodurch sich ein ausreichend großer Biegeradius ergibt. Unter der Trägerplatte 5 befindet sich ein Speicher zur Aufnahme einer Arbeits-Reservelänge für die einzelnen Glasfasern, der in Fig. 2 erkennbar ist. Der Speicher umfasst einen Innenbegrenzer 16 mit mehreren integrierten Niederhaltern 17. Des weiteren ist der Innenbegrenzer 16 mit zwei Öffnungen 18 versehen, die zusammen ein Umlenkelement bilden. Die zurückgeführten Glasfasern werden in den Speicher geführt und dort mehrmals gewickelt. Die RX-Glasfasern werden dann herausgeführt und über Stecker 19 in die zugehörige Kupplung 9 gesteckt. Die TX-Glasfasern werden zunächst nach dem Wickeln in den darüber liegenden Koppler 4 geführt und die von den Splittern abgebundenen Glasfasern wieder herausgeführt. Anschließend werden dann die aus dem Koppler 4 kommenden Glasfasern mittels der Stecker 19 in die Kupplung 9 geführt. Mittels des Umlenkelementes kann die Wickelrichtung einzelner Glasfasern umgedreht werden, so dass diese mit einem ausreichend großen Biegeradius in den Koppler 4 geführt werden können. Dies gilt insbesondere für einzelne Glasfasern, die in den Koppler 4 geführt werden müssen.

Wie weiter aus Fig. 2 zu entnehmen ist, ist die Trägerplatte 5 mit den darauf befindlichen Kupplungen 8 mittels zweier Scharniere 20 an den Kassettenträger 2 angelenkt. Auf der den Scharnieren 20 gegenüberliegenden Seite des Kassettenträgers 2 ist ein Verriegelungselement 21 angeordnet. Weiter sind im Speicher Führungselemente 22 für die Glasfasern angeordnet. Die Trägerplatte 5 ist im Bereich der Stecker 14 mit stegförmigen Verlängerungen ausgebildet, wobei die stegförmigen Verlängerungen 23 V-förmig nach unten abgewinkelt sind. Hierdurch wird verhindert, dass die aus dem Kabelkanal 6 kommenden bzw. in diesen zurückgeführten Glasfasern mit den Steckern 14 sowie den daran angeschlossenen Glasfasern in Berührung kommen.

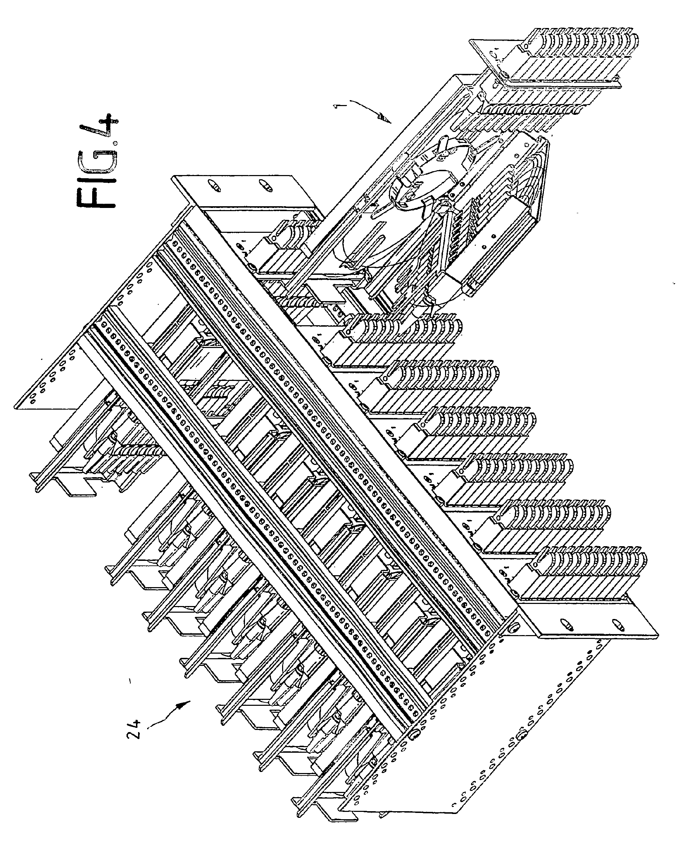

Wie nun aus Fig. 2 in Verbindung mit Fig. 4 ersichtlich, kann ein in einem Baugruppenträger 24 angeordnetes Glasfaser-Kopplermodul 1 herausgezogen und die Trägerplatte 5 aufgeschwenkt werden. In dieser aufgeschwenkten Position sind nun die Stecker 14, 15 und 19 sowie ggf. von der Vorderseite der Frontplatte gesteckte Stecker jeweils frei zugänglich. Die Stecker 14, 15, 19 können dann beispielsweise für Wartungszwecke gezogen und gereinigt werden. Beim Ziehen der Stecker 15 bzw. 19 steht dann dem Monteur die Arbeits-Reservelänge der Glasfasern im Speicher zur Verfügung, so dass die Stecker 15, 19 entsprechend von den Kupplungen 8, 9 räumlich entfernt werden können.

### Bezugszeichenliste

- 1: Glasfaser-Kopplermodul
- 2: Kassettenträger
- 3: Frontplatte
- 4: Koppler
- 5: Trägerplatte
- 6: Kabelkanäle
- 7: Anschlussteil
- 8: Kupplungen
- 9: Kupplungen
- 10: Freischnitt
- 11: Niederhalter
- 12: Splitter
- 13: Farbmarkierungen
- 14: Stecker
- 15: Stecker
- 16: Innenbegrenzer
- 17: Niederhalter
- 18: Öffnungen
- 19: Stecker
- 20: Scharniere
- 21: Verriegelungselement
- 22: Führungselement
- 23: Verlängerung
- 24: Baugruppenträger

## Patentansprüche

1. Glasfaser-Kopplermodul (1), umfassend einen Kassettenträger (2), der eine ebene Kassettenträgerplatte aufweist, eine Frontplatte (3) wobei der Kassettenträger mit der Frontplatte (3) verbunden ist, wobei die ebene Kassettenträgerplatte senkrecht zur Frontplatte (3) steht, einen Koppler (4), der an dem Kassettenträger (2) angeordnet ist, eine erste Gruppe von Kupplungen (8) und eine zweite Gruppe von Kupplungen (9), wobei die zweite Gruppe von Kupplungen (9) an der Frontplatte (3) angeordnet ist, und die erste Gruppe von Kupplungen (8) auf einer Trägerplatte (5) angeordnet ist,
**dadurch gekennzeichnet, dass**
die Trägerplatte (5) parallel zur Kassettenträoerolatte ausgerichtet ist, wobei die Trägerplatte (5) schwenkbar an dem Kassettenträger (2) angeordnet ist, wobei die Schwenkachse der Trägerplatte (5) parallel zu einer Seitenkante der Kassettenträgerplatte verläuft, wobei die Kupplungen auf der Trägerplatte so ausgerichtet sind, dass ihre Steckrichtung parallel zur Schwenkachse der Trägerplatte (5) verläuft.

2. Glasfaser-Kopplermodul nach Anspruch 1, **dadurch gekennzeichnet, dass** jedem ankommenden Patchkabel eine Kupplung (8) der ersten Gruppe zugeordnet ist.

3. Glasfaser-Kopplermodul nach Anspruch 1 oder 2, **dadurch gekennzeichnet, dass** alle Kupplungen (8) der ersten Gruppe in einer Reihe angeordnet sind.

4. Glasfaser-Kopplermodul nach einem der vorangegangenen Ansprüche, **dadurch gekennzeichnet, dass** alle Kupplungen (9) der zweiten Gruppe in einer Reihe angeordnet sind.

5. Glasfaser-Kopplermodul nach einem der vorangegangenen Ansprüche, **dadurch gekennzeichnet, dass** unter der Trägerplatte (5) Elemente zur Aufnahme einer Reserve-Arbeitslänge von Glasfasern angeordnet sind.

6. Glasfaser-Kopplermodul nach Anspruch 5, **dadurch gekennzeichnet, dass** unter der Trägerplatte (5) mindestens ein Umlenkelement angeordnet ist.

7. Glasfaser-Kopplermodul nach Anspruch 6, **dadurch gekennzeichnet, dass** das Umlenkelement als Innenbegrenzer (16) ausgebildet ist.

8. Glasfaser-Kopplermodul nach Anspruch 7, **dadurch gekennzeichnet, dass** der Innenbegrenzer (16) mit mindestens einem Niederhalter (17) ausgebildet ist.

9. Glasfaser-Kopplermodul nach einem der vorangegangenen Ansprüche,
**dadurch gekennzeichnet, dass** seitlich an der Trägerplatte (5) Kabelkanäle (6) angeordnet sind.

10. Glasfaser-Kopplermodul nach Anspruch 9, **dadurch gekennzeichnet, dass** die Breite der Trägerplatte (5) mit Kabelkanälen (6) kleiner oder gleich der Breite des Kassettenträgers (2) ist.

11. Glasfaser-Kopplermodul nach Anspruch 9 oder 10, **dadurch gekennzeichnet, dass** zwischen den Kabelkanälen (6) ein Anschlussteil (7) angeordnet ist.

12. Glasfaser-Kopplermodul nach einem der vorangegangenen Ansprüche, **dadurch gekennzeichnet, dass** die Trägerplatte (5) zur Rückseite des Kassettenträgers (2) mit nach unten gebogenen V-förmigen Verlängerungen (23) ausgebildet ist.

## Claims

1. Optical-fiber coupler module (1), comprising a cassette mount (2), which has a planar cassette mount panel, a front panel (3), the cassette mount being connected to the front panel (3), the planar cassette mount panel being at right angles to the front panel (3), a coupler (4), which is arranged on the cassette mount (2), a first group of couplings (8) and a second group of couplings (9), the second group of couplings (9) being arranged on the front panel (3), and the first group of couplings (8) being arranged on a mounting panel (5), **characterized in that** the mounting panel (5) is aligned parallel to the cassette mount panel, the mounting panel (5) being arranged on the cassette mount (2) such that it can pivot, the pivot axis of the mounting panel (5) running parallel to a side edge of the cassette mount panel, the couplings being aligned on the mounting panel in such a way that their plug-in direction runs parallel to the pivot axis of the mounting panel (5).

2. Optical-fiber coupler module according to Claim 1, **characterized in that** each incoming patch cable is assigned a coupling (8) in the first group.

3. Optical-fiber coupler module according to Claim 1 or 2, **characterized in that** all of the couplings (8) in the first group are arranged in a row.

4. Optical-fiber coupler module according to one of the preceding claims, **characterized in that** all of the couplings (9) in the second group are arranged in a row.

5. Optical-fiber coupler module according to one of the preceding claims, **characterized in that** elements for accommodating a spare working length of optical fibers are arranged beneath the mounting panel (5).

6. Optical-fiber coupler module according to Claim 5, **characterized in that** at least one direction-changing element is arranged beneath the mounting panel (5).

7. Optical-fiber coupler module according to Claim 6, **characterized in that** the direction-changing element is in the form of an inner limiter (16).

8. Optical-fiber coupler module according to Claim 7, **characterized in that** the inner limiter (16) is provided with at least one retainer (17).

9. Optical-fiber coupler module according to one of the preceding claims, **characterized in that** cable ducts (6) are arranged on the sides of the mounting panel (5).

10. Optical-fiber coupler module according to Claim 9, **characterized in that** the width of the mounting panel (5) with the cable ducts (6) is less than or equal to the width of the cassette mount (2).

11. Optical-fiber coupler module according to Claim 9 or 10, **characterized in that** a connection part (7) is arranged between the cable ducts (6).

12. Optical-fiber coupler module according to one of the preceding claims, **characterized in that** the mounting panel (5) to the rear of the cassette mount (2) is provided with V-shaped extensions (23) bent downwards.

## Revendications

1. Module (1) d'accouplement de fibres de verre, qui comprend un support (2) de cassette qui présente une plaque plane de support de cassette, une plaque avant (3), le support de cassette étant relié à la plaque avant (3), la plaque plane de support de cassette étant perpendiculaire à la plaque avant (3), un accouplement (4) disposé sur le support (2) de cassette, un premier groupe d'accouplements (8) et un deuxième groupe d'accouplements (9), le deuxième groupe d'accouplements (9) étant disposé sur la plaque avant (3) et le premier groupe d'accouplement (8) sur une plaque de support (5),
**caractérisé en ce que**
la plaque de support (5) est orientée parallèlement à la plaque de support de cassette, la plaque de support (5) étant disposée de manière à pouvoir pivoter sur le support (2) de cassette, l'axe de pivotement de la plaque de support (5) étant parallèle à un bord latéral de la plaque de support de cassette et les accouplements disposés sur la plaque de support étant orientés de telle sorte que leur direction d'enfichage soit parallèle à l'axe de pivotement de la plaque de support (5).

2. Module d'accouplement de fibres de verre selon la revendication 1, **caractérisé en ce qu'**à chaque câble de raccordement entrant est associé un accouplement (8) du premier groupe.

3. Module d'accouplement de fibres de verre selon la revendication 1 ou 2, **caractérisé en ce que** tous les accouplements (8) du premier groupe sont disposés en série.

4. Module d'accouplement de fibres de verre selon l'une quelconque des revendications précédentes, **caractérisé en ce que** tous les accouplements (9) du deuxième groupe sont disposés en série.

5. Module d'accouplement de fibres de verre selon l'une quelconque des revendications précédentes, **caractérisé en ce que** des éléments de réception d'une longueur de travail de réserve de fibres de verre sont disposés en dessous de la plaque de support (5).

6. Module d'accouplement de fibres de verre selon la revendication 5, **caractérisé en ce qu'**au moins un élément de déviation est disposé en dessous de la plaque de support (5).

7. Module d'accouplement de fibres de verre selon la revendication 6, **caractérisé en ce que** l'élément de déviation est configuré comme délimiteur interne (16).

8. Module d'accouplement de fibres de verre selon la revendication 7, **caractérisé en ce que** le délimiteur interne (16) est configuré avec au moins une retenue inférieure (17).

9. Module d'accouplement de fibres de verre selon l'une quelconque des revendications précédentes, **caractérisé en ce que** des canaux (6) pour câbles sont disposés latéralement sur la plaque de support (5).

10. Module d'accouplement de fibres de verre selon la revendication 9, **caractérisé en ce que** la largeur de la plaque de support (5) avec ses canaux (6) pour câbles est inférieure ou égale à la largeur du support (2) de cassette.

11. Module d'accouplement de fibres de verre selon la revendication 9 ou 10, **caractérisé en ce qu'**une pièce de raccordement (7) est disposée entre les canaux (6) pour câbles.

12. Module d'accouplement de fibres de verre selon l'une quelconque des revendications précédentes, **caractérisé en ce que** sur le côté arrière du support (2) de cassette, la plaque de support (5) est configurée avec des prolongements (23) en forme de V repliés vers le bas.
